# EUROPEAN PATENT APPLICATION

(11) **EP 2 236 913 A1**
(43) Date of publication of application: **06.10.2010**
(21) Application number: 09425126.1
(22) Date of filing: 01.04.2009
(51) Int. Cl.: F21S 8/08, F21S 9/03, F21W 131/103

(54) **Photovoltaic system on a public lamp post with energy recovery**

(71) Applicant: Quinzi, Gianni, 05010 San Venanzo (TR) (IT); Chiacchieroni, Alfredo, 05010 San Venanzo (TR) (IT)
(72) Inventor: Quinzi, Gianni, 05010 San Venanzo (TR) (IT); Chiacchieroni, Alfredo, 05010 San Venanzo (TR) (IT)
(74) Representative: Cioncoloni, Giuliana

(57) **Abstract**

Our project consists in putting a different size photovoltaic panel both inside and outside ceiling lights placed on the public lamp-posts, in order to generate electricity with the only light released from the lamp, recover and re use solar energy by sellin it at local level. If we imagine many lamps lines, like in a parking, where the lamps are always alight, the system with panel can optimize the consumption of the lamps, not only for the first line, but also for the others lamps, as the second line regenerates the third, until the end of the row, of course partially.

This system will allow to:
-ensure efficiency and savings of reduced energy consumption both for Public administration and private citizens (like the neon lighted with energy savings for private consumption);
-save on installation and management costs;
- develop new jobs at a local level, for the whole system will be managed by IT ADSL and GSM network in order to assess in true time the exact consumed or sold amount of energy and check the maintenance works needed.

## Description

Our project consists in putting a different size photovoltaic panel both inside and outside ceiling lights placed on the public lamp-posts in order to recover and re use solar energy by selling it at a local level. Solar energy will be input and converted into electrical energy through the National subsidy energy scheme.

### Main issues:

- An arc panel is placed inside the lamp to recover the lost light reflected on the parabola.
- Such a system doesn't need any land battery use, it's certified and guaranteed for twenty years.
- panels are placed in parallel, by an interred connection range to which they are linked (by two lamp-posts and by six lamp-posts in parallel);

This system will allow to:
- ensure efficiency and savings of reduced energy consumption both for Public administration and private citizens;
- save on installation and management costs
- apply to European co financing funds
- Develop new jobs at a local level.

### Working details

As sun is shining, from dawn till sunset, the outside external panel will produce energy to be sent by electrical cables to the bidirectional electrical meter as additional selling and to be exchanged locally according to the National subsidy energy scheme;
- the Photovoltaic System is permanently linked to the electrical network;
- if the system is providing more energy than needed, the additional amount is driven to the network and counted through the bidirectional electrical meter ;
- In case of cloudy sky and if less amount of energy is produced, the needed energy will be provided by the provider local network (Enel, ASM, Acea, Aem.....);
- solar panels are placed on lamp posts (using a set of 12 lamp-posts as provided according to the National subsidy energy scheme) installed by qualified firms: therefore the costs related to photovoltaic production projects will be reduced as the system provided to one lamp-post will be reproduced in scale to each set of twelve lamp posts (minimum amount to obtain the 1 kwh subsidy).

The whole system will be managed by IT ADSL and GSM network in order to assess in true time the exact consumed or sold amount of energy and check the maintenance works needed.

The implementation of the system will take into account the following issues:
- The dimension and weight of the certified lamp-post according to its length 5/7/9/11 meters;
- The force of the wind at the top (certified);
- The Environmental impact assessment.

| FIGURE 1 | PLAN 1 |
|---|---|
| A reference | photovoltaic panel 85/90/100/130/160/210/230/260Wp |
| B reference | post anchor bracket |
| C reference | post 5/7/9/11 mt. thickness 3/4/5 mm |
| D reference | support panel bracket |
| E reference | ceiling light road 25/35/70/125/150/250 Sox e Son |
| F reference | junction photovoltaic panel |

Unlike the panels placed on the roofs (in serials) in this system panels are placed in parallel, by an interred connection range to wich they are linked (by two lamp posts and by six lamp posts in parallel).

On the connection range that cover the street, where the 12 lamp posts are placed (aproximately 300 m.), there will be a minimal voltage drop as the panels collocated on the top, will unload electrical tension on the connection range. For example, if we use a panel with 21 voltage at the end of the line (last post) and a panel of 25v. at the penultimate post, we will have another panel with 21v., connected in scale to each others, both downloaded the energy on the connecting range of the panel. So, connecting all panels to the system, the voltage at the first post (near the counter) is stabilized in 44v. To enter on line we use an inventer of the eolic system, in order to lower cost and also because it fits to our system both for voltage and amperage.

| FIGURE 2 | PLAN 2 |
|---|---|
| A reference | Photovoltaic esternal panels n. 12 |
| B reference | Photovoltaic internal panel n. 24 |
| C reference | connection range for energy recovery |
| D/E reference | exchangers electrical workers night7days |
| F/N reference | |
| H reference | inverter DK 5940 1080 Wp |
| I reference | inverter DK 5940 120 Wp |
| L/M reference | magnetotermico switch |
| O reference | electrical meter produced by GSE |
| P reference | ENEL counter electrical worker |

### Night consumption and recovery of the lamp working during night hours

In order not to miss the cumulated energy in our light body, a pyramidal or quadrilateral arc panel is placed in the lamp-post parabola to recover dissipated brightness.

### How does it work?

- The external panel on the lamp-post, in sunshine conditions, provides energy to be resold to the service provider. To this aim, the external photovoltaic panel is used (15/25/36/70/85/90/110/130/150/210/250 WP or more).
- The internal panel placed inside the lamp, regardless of the type used, (15/25/36/79/125/150/250 WH or more) will produce energy from the operation itself of the lamp: with the lightening of the lamp, the photovoltaic panel inside the ceiling light, recover part of the brightness inside the parabola, to be sell to the national subside energy scheme. To this scope an internal panel 4/5/6/15/20 WP is used.

| FIGURE 3 | PLAN 3 |
|---|---|
| A reference | dish front portion |
| B reference | photovoltaic panel 5/10/15720 |
| C reference | lamp 25/35/70/125/250 |

### Saving for private citizens too

Our proposal is to use neon lights with energy savings for private consumption. Such a device could be placed in offices, supermarkets, parking and wherever lighting is needed by saving approximately 20% of the ordinary energy consumption. Neon light 1x18/1x36/1x58/ 2x18/2x36/2x58 with 230v of power supply and energy return from the 18/20v working light)

| • | FIGURE 4 | PLAN 4 |
|---|---|---|
| • | A reference | input 230v ac |
| • | B reference | output 18/36v cc (dc) |
| • | C reference | photovoltaic cells |
| • | D reference | neon light 1x36 - 1x58W |
| • | E reference | assembled ceiling light |

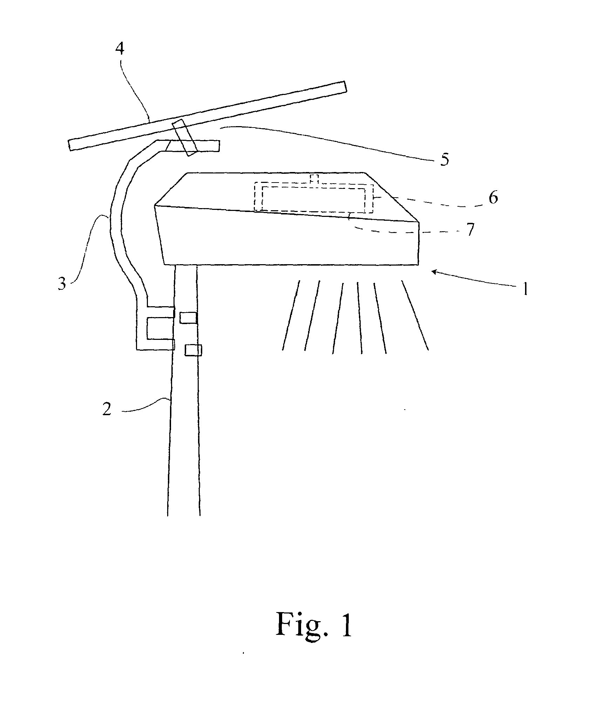

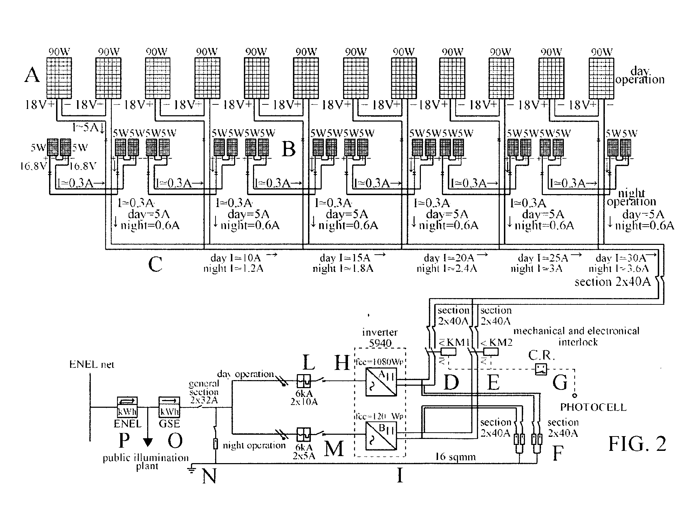

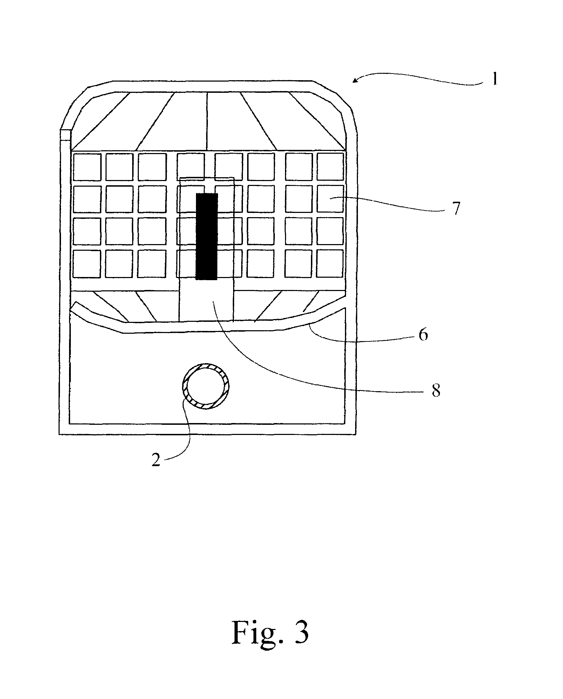

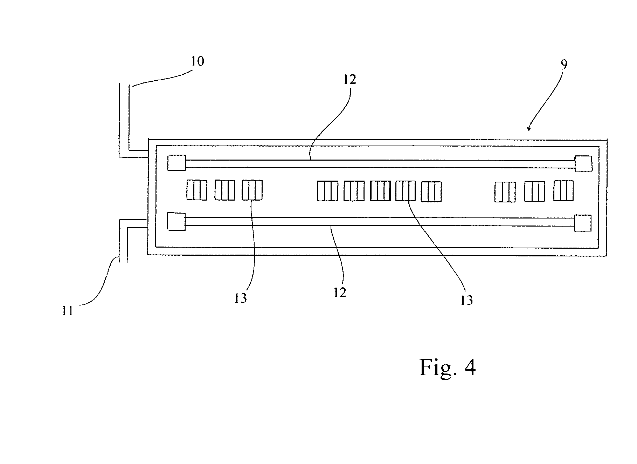

## Claims

1. A photovoltaic system on a public lamp-post with energy recovery, **characterised in that** different size photovoltaic panels (A; B) are placed both inside and outside ceiling lights placed on public lamp-posts in order to recover and re-use, on one hand, light reflected on a parabolic reflector of the ceiling light and, on the other hand, solar energy, to be sold at a local level.

2. The photovoltaic system according to claim 1, wherein the panels (A; B) of a pair of ceiling lights are placed in series and six pairs of those ceiling lights are placed in parallel to a connection line (C).

3. The photovoltaic system according to claim 2, wherein the panels (A; B) of those ceiling lights are connected to switching devices (D; E), then to inverters (H; I) and an electrical meter (O), and a counter (P), beyond thermomagnetic switches (L; M).

4. The photovoltaic system according to claims 2 and 3, wherein the connection line (C) is grounded in points thereof between the switching devices (D; E) and the inverters (H; I).

## Amended claims

### Amended claims in accordance with Rule 137(2) EPC.

**1.** A photovoltaic system suitable to be attached to a lamp-post, **characterised in that** internal and external photovoltaic panels (A; B) are placed inside and outside lamps respectively, that are mounted on lamp-posts, in order to recover energy from light of the lamps, on one hand, and from solar energy, on the other hand, and convert these energies to be re-used as electric energy.

**2.** The photovoltaic system according to claim 1, wherein all the external and internal photovoltaic panels (A; B) are placed in series in pairs, and six pairs of the external and internal photovoltaic panels (A; B) are placed in parallel to a connection line (C).

**3.** The photovoltaic system according to claim 2, wherein the external and internal photovoltaic panels (A; B) are connected through the connection line (C) to switching devices (D; E), then to inverters (H; I) and electric energy meters (O; P), beyond thermomagnetic switches (L; M).

**4.** The photovoltaic system according to claims 2 and 3, wherein the connection line (C) is grounded in points thereof between the switching devices (D; E) and the inverters (H; I).
